(19) Europäisches Patentamt / European Patent Office / Office européen des brevets

(11) EP 4 578 883 A1

(12) **EUROPEAN PATENT APPLICATION**

(43) Date of publication:
**02.07.2025 Bulletin 2025/27**

(21) Application number: **24222004.4**

(22) Date of filing: **20.12.2024**

(51) International Patent Classification (IPC):
***C08F 210/16*** (2006.01) ***C08F 2/06*** (2006.01)
***C08F 4/6592*** (2006.01) ***C09J 4/00*** (2006.01)

(52) Cooperative Patent Classification (CPC):
(C-Sets available)
C08F 4/65908; C08F 4/65912; C09J 4/00 (Cont.)

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **26.12.2023 KR 20230191518**

(71) Applicant: **DL Chemical Co., Ltd.**
**Seoul 03181 (KR)**

(72) Inventors:
- **CHUN, In Sung**
  **34021 Yuseong-gu, Daejeon (KR)**
- **KIM, So Han**
  **34108 Yuseong-gu, Daejeon (KR)**
- **BAE, Hee Sun**
  **30127 Sejong-si (KR)**
- **HYUN, Dae Hee**
  **01012 Seoul (KR)**
- **CHOI, Eung Man**
  **34186 Yuseong-gu, Daejeon (KR)**

(74) Representative: **Nordic Patent Service A/S**
**Bredgade 30**
**1260 Copenhagen K (DK)**

# (54) ETHYLENE/ALPHA-OLEFIN COPOLYMER AND METHOD FOR PREPARING SAME

(57) Disclosed are an ethylene/alpha-olefin copolymer having an ERI (ethylene-unit repeatness index) of 1.20 or less and a method of preparing the same.

EP 4 578 883 A1

(52) Cooperative Patent Classification (CPC): (Cont.)

C-Sets
**C08F 210/16, C08F 4/65927;**
C08F 210/16, C08F 2/06;
C08F 210/16, C08F 210/14, C08F 2500/03,
C08F 2500/17, C08F 2500/32, C08F 2500/33,
C08F 2500/34, C08F 2500/02, C08F 2500/27,
C08F 2500/22, C08F 2500/055

## Description

### CROSS-REFERENCE TO THE RELATED APPLICATION

The present application claims priority to and the benefit of Korean Patent Application No. 10-2023-0191518, filed on December 26, 2023, in the Korean Intellectual Property Office, the entire disclosure of which is incorporated herein by reference.

### BACKGROUND

#### 1. Field

Embodiments of the present disclosure relate to an ethylene/alpha-olefin copolymer and a method of preparing the same.

#### 2. Description of the Related Art

Hot melt adhesives are adhesives obtained from blends of resins such as polyolefin elastomers, polypropylene-based polymers, and amorphous polyolefins. Hot melt adhesives are eco-friendly adhesives that rapidly achieve adhesive strength compared to other adhesives and do not contain solvents. Therefore, hot melt adhesives are increasingly and widely used in fields such as paper, woodworking, construction, packaging, sanitary products, and electronics.

Various studies have been conducted to improve the properties of polyolefins used for such hot melt adhesives. For example, Korean Patent Laid-open Publication No. 10-2019-0013859 discloses a composition containing a propylene-based copolymer having a density of 0.850 g/cc to 0.900 g/cc, an ethylene-based polymer composition having a melt viscosity at 140°C of 10 mPa·s to 1,000 mPa·s, and a tackifier.

However, conventional amorphous polypropylene used in hot melt adhesives are not suitable for use in combination with various types of plasticizers, waxes, fillers, and tackifiers due to the lack of stereoregularity. Then, copolymers or terpolymers (e.g., Vestoplast from Evonik, Rextac from REXtac, Eastoflex from Eastman Chemical, etc.) prepared using APAO (amorphous poly alpha-olefin) with improved physical properties and Ziegler-Natta catalyst were proposed. Recently, polyolefins with more sophisticated and superior properties have been produced using metallocene catalysts. In particular, catalyst systems that can produce ethylene- or propylene-based copolymers (e.g., Affinity, Engage, Versify from DOW Chemical, Vistamaxx from ExxonMobil, etc.) using comonomers of 1-butene and 1-octane are being developed.

Recently, there has been increasing demand for hot melt adhesives that exhibit a predetermined level of adhesive strength with a small amount of adhesive in the production of paper or film. In particular, there is an urgent need for the development of hot melt adhesives that exhibit excellent low-temperature adhesiveness and coatability and satisfactory adhesive strength over a wide temperature range.

[Prior art literature]

[Patent literature]

1. Korean Patent Laid-open Publication No. 10-2019-0013859

### SUMMARY

Embodiments of the present disclosure provide an adhesive copolymer that has excellent adhesive strength at room temperature and low temperature using an ethylene/alpha-olefin copolymer having a continuous sequence having a small number of ethylene repeat units in the molecular structure thereof.

An ethylene/alpha-olefin copolymer according to an embodiment of the present disclosure to accomplish the above object has ERI (ethylene-unit repeatness index) of 1.20 or less, the ERI being defined by the following Equation 1:

[Equation 1]

$$\mathrm{ERI} = \frac{\{2 \times [\mathrm{EE}]\} \times \{[\mathrm{EO}]\}}{\{[\mathrm{EO}] \times (C_E/C_O)\} \times \{2 \times [\mathrm{OO}] \times (C_E/C_O)\}}$$

wherein

[EE] (ethylene-ethylene), [EO] (ethylene-alpha-olefin), and [OO] (alpha-olefin-alpha-olefin) are diad fractions of the ethylene/alpha-olefin copolymer measured by $^{13}$C-NMR; and

$C_E/C_O$ is a ratio of a number of ethylene moles ($C_E$) to a number of alpha-olefin moles (Co) in a liquid phase.

In one or more embodiments, the ratio of the number of ethylene moles ($C_E$) to the number of alpha-olefin moles ($C_O$) may be 6.0 to 11.0.
In one or more embodiments, [EE] may be 0.75 to 0.85, [EO] may be 0.15 to 0.25, and [OO] may be 0.001 to 0.05.
In one or more embodiments, the alpha-olefin may include at least one selected from the group consisting of 1-butene, 1-hexene, 1-pentene, 4-methyl-1-pentene, and 1-octene.
In one or more embodiments, the ethylene/alpha-olefin copolymer may have a molecular weight distribution (Mw/Mn, PDI) of 1.97 to 2.5.
In one or more embodiments, the ethylene/alpha-olefin copolymer may have a number average molecular weight (Mn) of 10,000 g/mol to 25,000 g/mol and a weight average molecular weight (Mw) of 25,000 g/mol to 50,000 g/mol.
In one or more embodiments, the ethylene/alpha-olefin copolymer may have a Brookfield viscosity at 190°C of 4,000 cps to 15,000 cps.
In one or more embodiments, the ethylene/alpha-olefin copolymer may have a melting temperature ($T_m$) of 50°C to 90°C, a crystallization temperature ($T_c$) of 45°C to 80°C, and a glass transition temperature ($T_g$) of -70°C to -40°C.
A method of preparing an ethylene/alpha-olefin copolymer according to another embodiment of the present disclosure to accomplish the above object includes polymerizing a feed stream supplied in the presence of a catalyst including at least one of a transition metal catalyst or a co-catalyst to produce a reaction product, and obtaining an ethylene/alpha-olefin copolymer from the reaction product, wherein the ethylene/alpha-olefin copolymer has an ERI (ethylene-unit repeatness index) of 1.20 or less and the ERI is defined by the following Equation 1:

[Equation 1]

$$\mathrm{ERI} = \frac{\{2 \times [\mathrm{EE}]\} \times \{[\mathrm{EO}]\}}{\{[\mathrm{EO}] \times (C_E/C_O)\} \times \{2 \times [\mathrm{OO}] \times (C_E/C_O)\}}$$

wherein

[EE] (ethylene-ethylene), [EO] (ethylene-alpha-olefin), and [OO] (alpha-olefin-alpha-olefin) are diad fractions of the ethylene/alpha-olefin copolymer measured by $^{13}$C-NMR; and

$C_E/C_O$ is a ratio of a number of ethylene moles ($C_E$) to a number of alpha-olefin moles (Co) in a liquid phase.

In one or more embodiments, the feed stream may contain a monomer and a comonomer, the monomer may include ethylene, and the comonomer may include at least one selected from the group consisting of 1-butene, 1-hexene, 1-pentene, 4-methyl-1-pentene, and 1-octene.
In one or more embodiments, in the polymerization reaction, the monomer may be supplied at a flow rate of 50 g/hr to 350 g/hr, the comonomer may be supplied at a flow rate of 50 g/hr to 250 g/hr, and a ratio of the flow rate of the monomer to the flow rate of the comonomer may be 0.1 to 2.
In one or more embodiments, hydrogen may be supplied at a flow rate of 0.01 g/hr to 0.3 g/hr in the polymerization reaction.
In one or more embodiments, the polymerization reaction may be performed at a temperature of 70°C to 140°C

and a pressure of 30 bar to 100 bar.

In one or more embodiments, the transition metal catalyst may include at least one selected from the group consisting of a catalyst represented by the following Formula 1 and a catalyst represented by the following Formula 2:

[Formula 1]

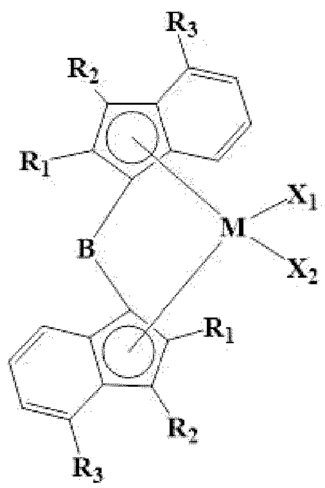

[Formula 2]

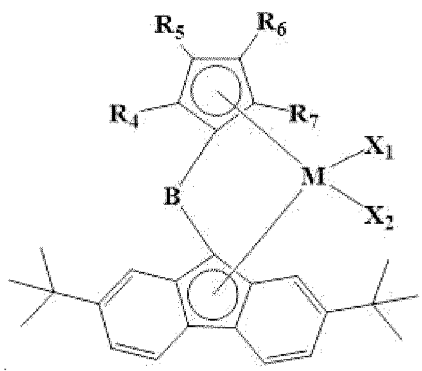

wherein

M is titanium, zirconium or hafnium;
B is an alkylene group having 1 to 20 carbon atoms, an arylene group having 6 to 20 carbon atoms, a dialkylsilicon group having 1 to 20 carbon atoms, a dialkylgermanium group having 1 to 20 carbon atoms, an alkylphosphine group having 1 to 20 carbon atoms, or an alkylamine group having 1 to 20 carbon atoms;
$X_1$ and $X_2$ are each independently a halogen atom, an alkyl group having 1 to 20 carbon atoms, an alkenyl group having 2 to 20 carbon atoms, an alkynyl group having 2 to 20 carbon atoms, an aryl group having 6 to 20 carbon atoms, an alkylaryl group having 7 to 40 carbon atoms, an arylalkyl group having 7 to 40 carbon atoms, an alkylamido group having 1 to 20 carbon atoms, an arylamido group having 6 to 20 carbon atoms, an alkylidene group having 1 to 20 carbon atoms, or an alkoxy group having 1 to 20 carbon atoms; and
$R_1$ to $R_7$ are each independently hydrogen, an alkyl group having 1 to 20 carbon atoms, an alkenyl group having 2 to 20 carbon atoms, an aryl group having 6 to 20 carbon atoms, an alkylaryl group having 7 to 20 carbon atoms, an arylalkyl group having 7 to 20 carbon atoms, a cycloalkyl group having 5 to 60 carbon atoms, a heterocyclic group having 4 to 20 carbon atoms, an alkynyl group having 1 to 20 carbon atoms, a heteroaryl group having 6 to 20 carbon atoms, or a silyl group having 6 to 20 carbon atoms.

The co-catalyst may contain an activator compound including a boron compound and a co-activator compound

including an organoaluminum compound.

The boron compound may include at least one selected from the group consisting of triphenylcarbenium tetrakis(pentafluorophenyl)borate, N,N-dimethylcyclohexylammonium tetrakis(pentafluorophenyl)borate, N,N-dimethylbenzylammonium tetrakis(pentafluorophenyl)borate, and N,N-dimethylanilinium tetrakis(pentafluorophenyl)borate, and the organoaluminum compound may include at least one selected from the group consisting of: alkylaluminum including dimethylaluminum, dimethylethylaluminum, trimethylaluminum, triethylaluminum, tributylaluminum, trihexylaluminum, trioctylaluminum, triisopropylaluminum, or triisobutylaluminum; alkylaluminum halide including dimethylaluminum chloride, diethylaluminum chloride, methylaluminum dichloride, ethylaluminum dichloride, dimethylaluminum fluoride, or ethylaluminum sesquichloride; dialkyl aluminum hydride including diethyl aluminum hydride or diisobutyl aluminum hydride, methyl aluminoxane, and improved methyl aluminoxane.

In the polymerization reaction, the transition metal catalyst may be supplied at 0.001 μmol/min to 0.040 μmol/min, and the co-catalyst may be supplied at 0.01 μmol/min to 0.2 μmol/min.

An ethylene/alpha-olefin copolymer according to another embodiment of the present disclosure to accomplish the above object is prepared using the method described above.

A composition for a hot melt adhesive according to another embodiment of the present disclosure to accomplish the above object contains the ethylene/alpha-olefin copolymer described above.

## DETAILED DESCRIPTION OF EXEMPLARY EMBODIMENTS

The terms or words used in the description and claims of the present disclosure should not be limited to ordinary or dictionary meanings, but should be interpreted as meanings and concepts that conform to the technical idea of the present disclosure, based on the principle that the present inventor can appropriately define the concept of the term in order to explain his or her own invention in the best manner.

As used herein, the term "stream" may mean a flow of fluid within a process and may also mean the fluid itself flowing within a tube. Specifically, the term "stream" may mean both a fluid itself flowing within a tube connecting each device and the flow of the fluid. In addition, the fluid may mean a gas or a liquid and does not exclude a fluid containing a solid component.

Embodiments are provided to more fully illustrate the present disclosure to a person having ordinary skill in the art, the following embodiments may be modified in various other forms, and the scope of the present disclosure is not limited to the following embodiments.

### <Ethylene/alpha-olefin copolymer>

The ethylene/alpha-olefin copolymer according to one embodiment satisfies an ERI (ethylene-unit repeatness index) of 1.20 or less and the ERI (ethylene-unit repeatness index) is defined by the following Equation 1:

[Equation 1]

$$\mathrm{ERI} = \frac{\{2 \times [\mathrm{EE}]\} \times \{[\mathrm{EO}]\}}{\{[\mathrm{EO}] \times (C_E/C_O)\} \times \{2 \times [\mathrm{OO}] \times (C_E/C_O)\}}$$

wherein

[EE] (ethylene-ethylene), [EO] (ethylene-alpha-olefin), and [OO] (alpha-olefin-alpha-olefin) are diad fractions of the ethylene/alpha-olefin copolymer measured by $^{13}$C-NMR; and

$C_E/C_O$ is a ratio of the number of ethylene moles ($C_E$) to the number of alpha-olefin moles (Co) in the liquid phase.

The ethylene/alpha-olefin copolymer according to the present disclosure has a small number of ethylene repeat units in the molecular structure thereof and may have an ERI (ethylene-unit repeatness index) of 1.20 or less, for example, 1.15 or less. When the ERI satisfies the range defined above, the ethylene/alpha-olefin copolymer may form a molecular structure in which the distribution of ethylene repeat units and short-chain branches in the main chain is uniform. The ethylene/alpha-olefin copolymer can provide excellent adhesion in a wide temperature range from room temperature to low temperature even in a small amount.

[EE] may be 0.75 to 0.85, [EO] may be 0.15 to 0.25, and [OO] may be 0.001 to 0.05. When [EE], [EO], and [OO] fall within the ranges defined above, the ethylene/alpha-olefin copolymer can provide excellent adhesion in a wide temperature range from room temperature to low temperature even in a small amount thereof.

The alpha-olefin may include at least one selected from the group consisting of 1-butene, 1-hexene, 1-pentene, 4-methyl-1-pentene, and 1-octene.

The molecular weight distribution (Mw/Mn, PDI) of the ethylene/alpha-olefin copolymer may be 1.97 to 2.5. When Mw/Mn is higher than the range defined above, the productivity of the target product may be reduced.

The ethylene/alpha-olefin copolymer may have a number average molecular weight (Mn) of 10,000 g/mol to 25,000 g/mol, and a weight average molecular weight (Mw) of 25,000 g/mol to 50,000 g/mol. When the number average molecular weight and the weight average molecular weight are less than the range defined above, the adhesive strength of the hot melt adhesive may be deteriorated due to excessively low viscosity and cohesion, and when the number average molecular weight and the weight average molecular weight are higher than the range defined above, it may be difficult to apply the hot melt adhesive due to excessively high viscosity of the hot melt adhesive.

The ethylene/alpha-olefin copolymer have a Brookfield viscosity at 190°C of 4,000 cps to 15,000 cps. When the Brookfield viscosity is less than the range defined above, the adhesive strength of the hot melt adhesive may be deteriorated due to excessively low molecular weight and cohesion and when the Brookfield viscosity is higher than the range defined above, it may be difficult to apply the hot melt adhesive due to excessively high molecular weight of the hot melt adhesive.

The ethylene/alpha-olefin copolymer may have a melting temperature ($T_m$) of 50°C to 90°C, a crystallization temperature ($T_c$) of 45°C to 80°C, and a glass transition temperature ($T_g$) of -70°C to -40°C. When the melting temperature and the crystallization temperature are less than the range defined above, the thermal stability may be reduced, and when the melting temperature and the crystallization temperature are higher than the range defined above, the viscosity of the adhesive composition containing the same may deviate from the target viscosity, or the mechanical properties and processability related thereto may be deteriorated. When the glass transition temperature is less than the range defined above, the heat resistance may be reduced, and when the glass transition temperature is higher than the range defined above, the stickiness of the hot melt adhesive may increase and the cold resistance may be reduced.

**<Method of preparing ethylene/alpha-olefin copolymer>**

A method of preparing an ethylene/alpha-olefin copolymer according to one embodiment includes polymerizing a feed stream supplied in the presence of a catalyst including at least one of a transition metal catalyst or a co-catalyst to produce a reaction product, and obtaining an ethylene/alpha-olefin copolymer from the reaction product. The ethylene/alpha-olefin copolymer prepared by the method satisfies an ERI (ethylene-unit repeatness index) of 1.20 or less and the ERI (ethylene-unit repeatness index) is defined by the following Equation 1:

[Equation 1]

$$ERI = \frac{\{2 \times [EE]\} \times \{[EO]\}}{\{[EO] \times (C_E/C_O)\} \times \{2 \times [OO] \times (C_E/C_O)\}}$$

wherein

[EE] (ethylene-ethylene), [EO] (ethylene-alpha-olefin), and [OO] (alpha-olefin-alpha-olefin) are diad fractions of the ethylene/alpha-olefin copolymer measured by $^{13}C$-NMR; and

$C_E/C_O$ is a ratio of the number of ethylene moles ($C_E$) to the number of alpha-olefin moles (Co) in the liquid phase.

<u>Feed Stream</u>

The feed stream includes a monomer and a comonomer, wherein the monomer includes ethylene and the comonomer includes an alpha-olefin monomer having 2 to 20 carbon atoms, for example, an aliphatic alpha-olefin monomer having 6 to 20 carbon atoms. The comonomer may be linear alpha-olefin such as propylene, 1-butene, 1-pentene, 3-methyl-1-butene, 1-hexene, 1-heptene, 1-octene, 1-decene, 1-dodecene, or 1-tetradecene, branched alpha-olefin such as 3-methyl-1-pentene or 4-methyl-1-pentene, or a mixture thereof, and may be used singly or in combination,

or as an isomer thereof. For example, the comonomer may include at least one selected from the group consisting of 1-butene, 1-hexene, 1-pentene, 4-methyl-1-pentene, and 1-octene.

In the polymerization reaction, the monomer is supplied at 50 g/hr to 350 g/hr, the comonomer is supplied at 50 g/hr to 250 g/hr, and the flow rate ratio of the monomer to the flow rate of the comonomer may be 0.1 to 2. When the supply speed of the monomer and the comonomer is less than the range defined above, the amount of catalyst fed may be relatively large, which may cause a deterioration in quality such as a color change due to an excess of catalyst, or the polymerization product may be too small, which may cause a decrease in productivity. When a ratio of the flow rate of the monomer to the flow rate of the comonomer does not fall within the range defined above, the molecular weight and viscosity of the product may deviate from the target molecular weight and viscosity.

In the polymerization reaction, hydrogen may be supplied at 0.01 g/hr to 0.3 g/hr. When the hydrogen supply rate exceeds the range, the chain transfer reaction proceeds in the direction of decreasing the molecular weight of the ethylene/alpha-olefin copolymer rather than the chain propagation reaction proceeding in the direction of increasing the molecular weight of the ethylene/alpha-olefin copolymer and thus the molecular weight and viscosity of the product may deviate from the target molecular weight and viscosity.

In the polymerization reaction, the polymerization temperature and pressure may vary depending on reactants, reaction conditions, and the like, but may generally be performed under conditions of a temperature of 70°C to 140°C and a pressure of 30 bar to 100 bar in the presence of an inert gas such as argon or nitrogen. When the temperature is below the range defined above, the chain propagation reaction proceeds better than the chain transfer reaction proceeding in the direction of decreasing the molecular weight of the ethylene/alpha-olefin copolymer. For this reason, a high molecular weight and high viscosity copolymer is formed and thus the molecular weight and viscosity of the product may deviate from the target molecular weight and viscosity. When the temperature exceeds the range defined above, the catalyst thermal stability may deteriorate and thus the catalyst activity may deteriorate. When the pressure is below the range defined above, the solubility of the monomer in the solvent may decrease, which may reduce the polymerization activity, or the fluctuation may become severe and the reaction may not be stabilized during the hydrogen reaction. When the pressure exceeds the range defined above, a lot of energy may be used during operation without any particular benefit, which may lower the operating efficiency.

The polymerization reaction may proceed as liquid phase, slurry phase, bulk phase, or gas phase polymerization in a hydrocarbon solvent. The hydrocarbon solvent may be an aliphatic hydrocarbon solvent having 5 to 20 carbon atoms, for example, an aliphatic hydrocarbon solvent such as pentane, hexane, heptane, nonane, decane, or an isomer thereof, an aromatic hydrocarbon solvent such as toluene, benzene, or xylene, a hydrocarbon solvent containing a halogen atom such as chlorobenzene, or a combination thereof. The polymerization reaction may be performed as a batch, semi-continuous, or continuous reaction in a single reactor such as a batch reactor or a loop reactor, or a combination thereof.

## Catalyst

The catalyst contains at least one of a transition metal catalyst or a co-catalyst.

### Transition metal catalyst

The transition metal catalyst is an organometallic compound including two ligands connected to each other via a bridge group. The transition metal catalyst may include at least one selected from the group consisting of a catalyst represented by the following Formula 1 and a catalyst represented by the following Formula 2:

[Formula 1]

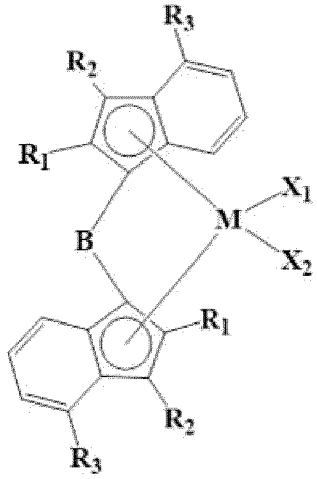

[Formula 2]

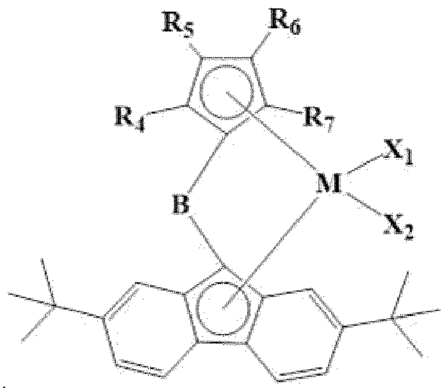

wherein

M is titanium, zirconium or hafnium;

B is an alkylene group having 1 to 20 carbon atoms, an arylene group having 6 to 20 carbon atoms, a dialkylsilicon group having 1 to 20 carbon atoms, a dialkylgermanium group having 1 to 20 carbon atoms, an alkylphosphine group having 1 to 20 carbon atoms, or an alkylamine group having 1 to 20 carbon atoms;

$X_1$ and $X_2$ are each independently a halogen atom, an alkyl group having 1 to 20 carbon atoms, an alkenyl group having 2 to 20 carbon atoms, an alkynyl group having 2 to 20 carbon atoms, an aryl group having 6 to 20 carbon atoms, an alkylaryl group having 7 to 40 carbon atoms, an arylalkyl group having 7 to 40 carbon atoms, an alkylamido group having 1 to 20 carbon atoms, an arylamido group having 6 to 20 carbon atoms, an alkylidene group having 1 to 20 carbon atoms, or an alkoxy group having 1 to 20 carbon atoms; and

$R_1$ to $R_7$ are each independently hydrogen, an alkyl group having 1 to 20 carbon atoms, an alkenyl group having 2 to 20 carbon atoms, an aryl group having 6 to 20 carbon atoms, an alkylaryl group having 7 to 20 carbon atoms, an arylalkyl group having 7 to 20 carbon atoms, a cycloalkyl group having 5 to 60 carbon atoms, a heterocyclic group having 4 to 20 carbon atoms, an alkynyl group having 1 to 20 carbon atoms, a heteroaryl group having 6 to 20 carbon atoms, or a silyl group having 6 to 20 carbon atoms.

**Co-catalyst**

The co-catalyst may contain an activator compound, a co-activator compound, or a mixture thereof.

The activator compound reacts with the transition metal catalyst to form an ionic compound and may include a boron compound. The boron compound may include at least one selected from the group consisting of triphenylcarbenium tetrakis(pentafluorophenyl)borate, N,N-dimethylcyclohexylammonium tetrakis(pentafluorophenyl)borate, N,N-dimethylbenzylammonium tetrakis(pentafluorophenyl)borate, and N,N-dimethylanilinium tetrakis(pentafluorophenyl)borate.

The mixing ratio (molar ratio) of the transition metal catalyst to the activator compound may fall within the range of

10:1 to 1:100, for example, 2:1 to 1:10. When the mixing ratio of the activator compound to the transition metal catalyst is less than the above-defined range, the activation of the transition metal catalyst may not be completely achieved, making it difficult to control the polymerization reaction, and when the mixing ratio is more than the above-defined range, the non-activated compound may cause a side reaction, making it difficult to control the polymerization reaction.

The co-activator compound acts to facilitate the activation of the catalyst and may include an organoaluminum compound. The organoaluminum compound may be selected from the group consisting of: alkylaluminum such as dimethylaluminum, dimethylethylaluminum, trimethylaluminum, triethylaluminum, tributylaluminum, trihexylaluminum, trioctylaluminum, triisopropylaluminum, or triisobutylaluminum; alkylaluminum halide such as dimethylaluminum chloride, diethylaluminum chloride, methylaluminum dichloride, ethylaluminum dichloride, dimethylaluminum fluoride, or ethylaluminum sesquichloride; dialkyl aluminum hydride such as diethyl aluminum hydride or diisobutyl aluminum hydride, methyl aluminoxane, and improved methyl aluminoxane.

The mixing ratio (molar ratio) of the transition metal catalyst to the co-activator compound may fall within the range of 1:1 to 1:10,000, for example, 1:5 to 1:1,000. When the mixing ratio of the co-activator compound to the transition metal catalyst is less than the range defined above, the amount of the co-activator compound may be small and thus the alkylation of the catalyst compound may not proceed completely, and when the mixing ratio exceeds the range defined above, the activation may not be completely achieved due to a side reaction between the compounds.

The alpha-olefin monomer used herein is sensitive to moisture. Therefore, it is important to control the moisture contained therein due to catalyst poisoning, or the like and it is preferable to use the co-activator compound as a scavenger to reduce the influence of moisture on the polymerization reaction. The usage ratio (molar ratio) of the co-activator compound to the moisture falls within the range of 1:1 to 1:1,000, for example, 1:1 to 1:100. When the ratio of the co-activator compound to moisture is less than the range defined above, the scavenger may not function properly, which may result in a decrease in the polymerization activity of the catalyst activated by moisture, and when the ratio exceeds the range defined above, the amount may be greater than the amount required for scavenging or alkylation of the catalyst compound, which may result in a side reaction or inhibit the polymerization reaction.

The catalyst may be used in an amount of 0.001 to 1 mol%, for example, 0.001 to 0.1 mol%, with respect to the feed stream for forming the ethylene/alpha-olefin copolymer. When the content of the catalyst is less than the range defined above, the polymerization reaction may not proceed sufficiently, and when the content exceeds the range defined above, quality deterioration such as discoloration due to excessive catalyst, difficulty in post-processing, polymerization reaction control, and reactor troubles may occur.

In the polymerization reaction, the transition metal catalyst may be supplied at 0.001 μmol/min to 0.040 μmol/min, and the co-catalyst may be supplied at 0.01 μmol/min to 0.2 μmol/min. When the supply rate of the transition metal catalyst is less than the range defined above, the amount of catalyst fed may be excessively small compared to the amount of monomer fed and thus the polymerization reaction may not be properly performed and a product with a higher molecular weight and higher molecular weight than the target may be produced. When the supply rate of the co-catalyst is less than the range defined above, the activation of the transition metal catalyst may not be completely performed, making it difficult to control the polymerization reaction, and when the supply rate of the co-catalyst exceeds the range defined above, the non-activated compound may cause a side reaction, making it difficult to control the polymerization reaction.

Hereinafter, specific examples of the present disclosure will be described. However, the examples described below are only provided to exemplify or illustrate the present disclosure in detail and should not be construed as limiting the scope of the present disclosure. In addition, other details that may be sufficiently technically conceived by those skilled in the art will be not described.

**[Synthesis Example 1: Synthesis of Transition Metal Catalyst A]**

Transition metal catalyst A ([di-phenyl-silanediyl-bis(2-methyl-4-phenylindenyl)]-zirconium dimethyl) of Formula 1 was synthesized according to the method described in Organometallics 1994, 13, 954-963 and J. Mol. Catal. A: chem. 1998, 130, 149-162. The cross-linked metallocene compound refers to a cross-linked metallocene compound obtained only as a racemic compound, unless the ratio of the racemic isomer and the meso isomer is indicated.

**[Synthesis Example 2: Synthesis of Transition Metal Catalyst B]**

Transition metal catalyst B (1-(normal-butylcyclopentadienyl)-1-(2,7-di-tert-butylfluorenyl)-1,1-diphenylmethylidene zirconium dimethyl) of Formula 2 was synthesized according to the method described in KR 10-1437509 and J. Mol. Catal. A: chem. 1998, 130, 149-162. The cross-linked metallocene compound refers to a cross-linked metallocene compound obtained only as a racemic compound, unless the ratio of the racemic isomer and the meso isomer is indicated.

**[Preparation Example: Preparation of ethylene/alpha-olefin copolymer]**

Preparation Example 1

1 L of hexane was charged into a 1 L stainless steel autoglaze continuous process reactor and the internal temperature of the reactor was maintained at a polymerization temperature of 90°C. While 2,000 g/hr of hexane, 120 g/hr of 1-octene, and 0.17 g/hr of hydrogen were injected through the LMFC and MFC, 0.0034 μmol/min of transition metal catalyst A, 0.014 μmol/min of co-catalyst 1 (dimethylanilinium tetrakis(pentafluorophenyl) borate), and 0.04 mmol/min of co-catalyst 2 (triisobutyl aluminum) were simultaneously charged into the reactor, to initiate a polymerization reaction. Subsequently, the polymerization reaction was performed under the conditions of 120 g/hr of ethylene and 0.017 g/hr of hydrogen while maintaining the polymerization reaction pressure of 50 bar and the polymerization temperature of 90°C. The polymerization was terminated with Irganox 1076, hexane, and isopropyl alcohol, and the residual solvent and raw materials were removed in a vacuum oven at 150°C for 6 hours or longer to prepare an ethylene/alpha-olefin copolymer of Preparation Example 1.

Preparation Examples 2 to 14

Ethylene/alpha-olefin copolymers of respective Preparation Examples were prepared in the same manner as in Preparation Example 1, except that the conditions in Table 1 were used.

[Table 1]

| | Type of catalyst | Catalyst (μmol/min) | Co-catalyst 1 (μmol/min) | Co-catalyst 2 (mmol/min) | Ethylene (g/hr) | 1-Octene (g/hr) | Hexane (g/hr) | Hydrogen (g/hr) | Polymerization temperature (°C) |
|---|---|---|---|---|---|---|---|---|---|
| Preparation Example 1 | A | 0.0034 | 0.014 | 0.04 | 120 | 120 | 2,000 | 0.17 | 90 |
| Preparation Example 2 | A | 0.0051 | 0.02 | 0.04 | 120 | 80 | 2,000 | 0.05 | 90 |
| Preparation Example 3 | A | 0.0034 | 0.014 | 0.04 | 120 | 130 | 2,000 | 0.17 | 90 |
| Preparation Example 4 | B | 0.015 | 0.06 | 0.04 | 90 | 215 | 1,400 | 0.19 | 110 |
| Preparation Example 5 | B | 0.015 | 0.06 | 0.04 | 120 | 170 | 1,400 | 0.19 | 100 |
| Preparation Example 6 | A | 0.0068 | 0.027 | 0.04 | 300 | 215 | 2,000 | 0.24 | 110 |
| Preparation Example 7 | A | 0.0068 | 0.027 | 0.04 | 300 | 215 | 2,000 | 0.27 | 110 |
| Preparation Example 8 | A | 0.0068 | 0.027 | 0.04 | 300 | 215 | 2,000 | 0.29 | 110 |
| Preparation Example 9 | A | 0.0051 | 0.02 | 0.04 | 120 | 110 | 2,000 | 0.08 | 90 |

(continued)

| | Type of catalyst | Catalyst (μmol/min) | Co-catalyst 1 (μmol/min) | Co-catalyst 2 (mmol/min) | Ethylene (g/hr) | 1-Octene (g/hr) | Hexane (g/hr) | Hydrogen (g/hr) | Polymerization temperature (°C) |
|---|---|---|---|---|---|---|---|---|---|
| Preparation Example 10 | A | 0.0051 | 0.02 | 0.04 | 120 | 140 | 2,000 | 0.12 | 90 |
| Preparation Example 11 | A | 0.0051 | 0.02 | 0.04 | 120 | 140 | 2,000 | 0.13 | 90 |
| Preparation Example 12 | A | 0.0051 | 0.02 | 0.04 | 120 | 136 | 2,000 | 0.15 | 90 |
| Preparation Example 13 | B | 0.015 | 0.06 | 0.04 | 200 | 140 | 1,500 | 0.11 | 90 |
| Preparation Example 14 | B | 0.015 | 0.06 | 0.04 | 200 | 140 | 1,500 | 0.11 | 90 |

**[Measurement of physical properties]**

The physical properties of the ethylene/alpha-olefin copolymers of respective Preparation Examples and the ethylene/alpha-olefin copolymer of respective Comparative Examples were measured in accordance with the following method, and the results are shown in Tables 2 and 3 below. The ethylene/alpha-olefin copolymer of Comparative Example 1 is Affinity 1900 from DOW Corporation, and the ethylene/alpha-olefin copolymer of Comparative Example 2 is Affinity 1950 from DOW Corporation.

**Number average molecular weight and weight average molecular weight**

The number average molecular weight and weight average molecular weight were measured using gel permeation chromatography-RI (GPC-RI; Polymer Laboratory Inc. 220 System) equipped with a refractive index detector (RI Detector) according to the following method. Two Olexis and one Guard were used as separation columns and the column temperature was maintained at 160°C. Calibration was performed using a standard polystyrene set from Polymer Laboratory Inc. Trichlorobenzene containing 0.0125 wt% antioxidant (BHT) was used as the eluent, the sample concentration was 1.0 mg/mL, and the measurement was performed for 27 minutes in a feed amount of 0.2 mL at a pump flow rate of 1.0 mL/min. Universal calibration was performed using Easical A and Easical B (Agilent) as polystyrene standard materials, conversion to polyethylene was performed, and the number average molecular weight (Mn) and weight average molecular weight (Mw) were calculated.

**Viscosity**

The following measurements were made using a Brookfield viscometer (BROOKFIELD DV2T Viscometer). 10 g of the ethylene/alpha-olefin copolymer of each of Preparation Examples and Comparative Examples was heated to 190°C using a Thermo-cell and allowed to stand until the sample was completely melted, and then the viscometer was lowered and the spindle (No. 27) was fixed. The rotation speed of the spindle (No. 27) was fixed to 0.5 rpm and was monitored until the value stabilized, and then the final value was recorded.

**Crystallization temperature ($T_c$), melting temperature ($T_m$) and glass transition temperature ($T_g$)**

The following measurements were made using a differential scanning calorimeter (DSC, TA's Q2000). The temperature of the ethylene/alpha-olefin copolymer of each of Preparation Examples and Comparative Examples was

cooled to -80°C and maintained for 1 minute. The ethylene/alpha-olefin copolymer was heated again to 200°C at 40°C/min and maintained for 2 minutes. The ethylene/alpha-olefin copolymer was cooled to -80°C at 5°C/min and maintained for 2 minutes. Finally, the ethylene/alpha-olefin copolymer was heated to 200°C at 10°C/min. The values measured in each section were defined as a crystallization temperature, melting temperature, and glass transition temperature.

**Sequence**

The following measurements were made using an Avance III 500 MHz, Bruker Biospin nuclear magnetic resonance device. A sample tube was charged with tetrachloroethane (tetrachloroethane-d4, Acros, 99.8 atom% D) as a solvent and 10 wt% of the ethylene/alpha-olefin copolymer of each of Preparation Examples and Comparative Examples, and $^{13}$C-NMR spectrum was obtained using a nuclear magnetic resonance device under the conditions of a pulse width of 45 $\mu$s, a pulse repetition time of 10 s and a temperature of 110°C, to measure the contents of ethylene and alpha-olefin in the copolymer. The triad fractions [EEE], [EEO+OEE], [EOE], [EOO+OOE], [OEO], and [OOO], diad fractions [EE], [EO], and [OO], the number of ethylene moles ($C_E$), and the number of alpha-olefin moles (Co) were determined from the obtained $^{13}$C-NMR spectrum in accordance with Equations disclosed in J. Macromol. Sci. Part C: Polym. Rev. 1989, 29, 201-317, J. Polym. Sci. Part A: Polym. Chem. 1994, 32, 2979-2987, and RSC Adv. 2017, 7, 10175-10182.

**Kraft and BOPP adhesive strength**

The ethylene/alpha-olefin copolymer of each of Preparation Examples and Comparative Examples was melted at 180°C for 3 minutes, and two sheets of Kraft film (width of 14.8 cm and length of 10.5 cm) were prepared and five lines with a thickness of 3.0 mm and a length of 2.0 cm were applied to one surface. The other surface was covered and pressed at a pressure of 2.8 kgf/cm using a Heat Gradient Tester (Toyoseiki) for an average of 5 seconds or until melted. The line was cut into 1.0 cm thick pieces and aged for 24 hours under constant temperature and humidity conditions, the Kraft adhesive strength was measured using multi-axis precise adhesion testing equipment (YEONJIN S-Tech, TXA) under the conditions of width 10.0 mm, velocity 0.8334 mm/s, test time 70 s, and temperature (room temperature, -20°C).

The BOPP adhesive strength was measured in the same manner as in the Kraft adhesive strength measurement except that a BOPP (Bi-axially Oriented Polypropylene) film (width 15.0 cm, length 11.0 cm) was used.

[Table 2]

| | Mn | Mw | Mw/Mn | Brookfield viscosity (cP, 190°C) | Tm (°C) | Tc (°C) | Tg (°C) |
|---|---|---|---|---|---|---|---|
| Preparation Example 1 | 14,100 | 30,80 0 | 2.18 | 6,000 | 76 | 64 | -56 |
| Preparation Example 2 | 12,400 | 27,90 0 | 2.25 | 5,000 | 72 | 58 | -56 |
| Preparation Example 3 | 15,000 | 33,30 0 | 2.22 | 6,500 | 74 | 64 | -53 |
| Preparation Example 4 | 16,000 | 31,80 0 | 1.99 | 7,500 | 65 | 55 | -56 |
| Preparation Example 5 | 13,000 | 28,60 0 | 2.2 | 6,000 | 71 | 60 | -53 |
| Comparative Example 1 | 16,600 | 32,30 0 | 1.95 | 6,000 | 69 | 55 | -55 |
| Preparation Example 6 | 21,400 | 43,80 0 | 2.04 | 12,000 | 69 | 54 | -56 |
| Preparation Example 7 | 21,000 | 43,60 0 | 2.08 | 13,000 | 72 | 58 | -54 |
| Preparation Example 8 | 21,400 | 43,10 0 | 2.02 | 12,500 | 73 | 59 | -56 |
| Preparation Example 9 | 17,100 | 39,00 0 | 2.28 | 11,000 | 74 | 60 | -52 |
| Preparation Example 10 | 20,200 | 44,80 0 | 2.22 | 13,500 | 65 | 58 | -55 |
| Preparation Example 11 | 18,500 | 41,20 0 | 2.22 | 12,000 | 65 | 58 | -52 |
| Preparation Example 12 | 19,500 | 42,00 0 | 2.13 | 12,500 | 68 | 58 | -54 |
| Preparation Example 13 | 16,900 | 37,30 0 | 2.21 | 10,500 | 73 | 59 | -59 |
| Preparation Example 14 | 16,200 | 37,40 0 | 2.3 | 11,000 | 70 | 54 | -53 |
| Comparative Example 2 | 20,000 | 38,40 0 | 1.91 | 12,000 | 73 | 59 | -58 |

[Table 3]

| | Diad Sequence (%) | | | Monomer Content (mol%) | | ERI | BOPP adhesive strength (gf) | | Kraft adhesive strength (gf) | |
|---|---|---|---|---|---|---|---|---|---|---|
| | [EE] | [EO] | [OO] | Ethyle ne | 1-octen e | - | RT | -20°C | RT | -20°C |
| Preparati on Example 1 | 0.82 2 | 0.166 | 0.013 | 30.9 | 3.09 | 0.65 | 344 | 281 | 40 | 50 |
| Preparati on Example 2 | 0.80 8 | 0.181 | 0.011 | 29.9 | 3.4 | 0.92 | 230 | 303 | 65 | 82 |
| Preparati on Example 3 | 0.80 6 | 0.179 | 0.015 | 30.6 | 3.52 | 0.69 | 486 | 520 | 94 | 77 |
| Preparati on Example 4 | 0.78 5 | 0.195 | 0.02 | 29.8 | 3.75 | 0.62 | 145 | 113 | 84 | 56 |
| Preparati on Example 5 | 0.79 4 | 0.189 | 0.018 | 29.8 | 3.7 | 0.69 | 213 | 132 | 55 | 49 |
| Comparat ive Example 1 | 0.78 | 0.207 | 0.012 | 28.7 | 3.97 | 1.21 | 113 | 101 | 32 | 46 |
| Preparati on Example 6 | 0.79 5 | 0.192 | 0.013 | 27.9 | 3.63 | 1.01 | 489 | 555 | 138 | 77 |
| Preparati on Example 7 | 0.80 2 | 0.18 | 0.018 | 29.1 | 3.46 | 0.64 | 492 | 539 | 86 | 76 |
| Preparati on Example 8 | 0.82 2 | 0.171 | 0.07 | 29.5 | 3.28 | 0.74 | 491 | 566 | 71 | 74 |
| Preparati on Example 9 | 0.81 5 | 0.174 | 0.012 | 31.1 | 3.39 | 0.84 | 665 | 471 | 101 | 119 |
| Preparati on Example 10 | 0.80 3 | 0.186 | 0.01 | 29.5 | 3.51 | 1.13 | 741 | 975 | 146 | 173 |
| Preparati on Example 11 | 0.80 5 | 0.18 | 0.015 | 29.8 | 3.42 | 0.69 | 454 | 498 | 126 | 146 |
| Preparati on Example 12 | 0.80 3 | 0.182 | 0.015 | 30 | 3.43 | 0.69 | 671 | 726 | 110 | 127 |
| Preparati on Example 13 | 0.79 9 | 0.184 | 0.016 | 30.8 | 3.53 | 0.64 | 447 | 446 | 60 | 52 |
| Preparati on Example 14 | 0.80 4 | 0.182 | 0.016 | 30 | 3.57 | 0.83 | 424 | 421 | 62 | 53 |
| Comparat ive Example 2 | 0.80 3 | 0.19 | 0.007 | 30.8 | 3.53 | 1.44 | 373 | 403 | 58 | 50 |

As can be seen from Tables 2 and 3 above, the ethylene/alpha-olefin copolymers of Preparation Examples 1 to 14 having ERI according to the present disclosure exhibited excellent adhesive strength at room temperature and low temperature. On the other hand, as a result of preparing physical properties between the ethylene/alphaolefin copolymers in a similar viscosity range, the ethylene/alpha-olefin copolymer of Comparative Example 1, which did not fall within the ERI range according to the present disclosure, exhibited inferior adhesive strength compared to the ethylene/alpha-olefin copolymer of Preparation Examples 1 to 5 according to the present disclosure. And the ethylene/alpha-olefin copolymer of Comparative Example 2, which did not fall within the ERI range according to the present disclosure, exhibited inferior adhesive strength compared to the ethylene/alpha-olefin copolymer of each of Preparation Examples 6 to 14 according to the present disclosure.

As is apparent from the above description, the present disclosure provides a copolymer for an adhesive that

exhibits excellent adhesive strength at room temperature and low temperature using an ethylene/alpha-olefin copolymer having a continuous sequence having a small number of ethylene repeat units in the molecular structure thereof. The ethylene/alpha-olefin copolymer according to the present disclosure has a small number of ethylene repeat units in the molecular structure thereof, thus uniformly distributing ethylene repeat units and short-chain branches in a main chain. The ethylene/alpha-olefin copolymer of the present disclosure is applicable to a hot melt adhesive and the hot melt adhesive has excellent adhesive strength in a wide temperature range even when applied in a small amount.

**Claims**

1. An ethylene/alpha-olefin copolymer having an ERI (ethylene-unit repeatness index) of 1.20 or less, the ERI being defined by the following Equation 1:

[Equation 1]

$$\mathrm{ERI} = \frac{\{2 \times [\mathrm{EE}]\} \times \{[\mathrm{EO}]\}}{\{[\mathrm{EO}] \times (C_E/C_O)\} \times \{2 \times [\mathrm{OO}] \times (C_E/C_O)\}}$$

wherein

[EE] (ethylene-ethylene), [EO] (ethylene-alpha-olefin), and [OO] (alpha-olefin-alpha-olefin) are diad fractions of the ethylene/alpha-olefin copolymer measured by $^{13}$C-NMR; and
$C_E/C_O$ is a ratio of a number of ethylene moles ($C_E$) to a number of alpha-olefin moles (Co) in a liquid phase.

2. The ethylene/alpha-olefin copolymer as claimed in claim 1, wherein the ratio of the number of ethylene moles ($C_E$) to the number of alpha-olefin moles (Co) is 6.0 to 11.0.

3. The ethylene/alpha-olefin copolymer as claimed in claim 1, wherein [EE] is 0.75 to 0.85, [EO] is 0.15 to 0.25, and [OO] is 0.001 to 0.05.

4. The ethylene/alpha-olefin copolymer as claimed in claim 1, wherein the alpha-olefin comprises at least one selected from the group consisting of 1-butene, 1-hexene, 1-pentene, 4-methyl-1-pentene, and 1-octene.

5. The ethylene/alpha-olefin copolymer as claimed in claim 1, wherein the ethylene/alpha-olefin copolymer has a molecular weight distribution (Mw/Mn, PDI) of 1.97 to 2.5.

6. The ethylene/alpha-olefin copolymer as claimed in claim 1, wherein the ethylene/alpha-olefin copolymer has a number average molecular weight (Mn) of 10,000 g/mol to 25,000 g/mol and a weight average molecular weight (Mw) of 25,000 g/mol to 50,000 g/mol.

7. The ethylene/alpha-olefin copolymer as claimed in claim 1, wherein the ethylene/alpha-olefin copolymer has a Brookfield viscosity at 190°C of 4,000 cps to 15,000 cps.

8. The ethylene/alpha-olefin copolymer as claimed in claim 1, wherein the ethylene/alpha-olefin copolymer has a melting temperature (Tm) of 50°C to 90°C, a crystallization temperature (Tc) of 45°C to 80°C, and a glass transition temperature (Tg) of -70°C to -40°C.

9. A method of preparing an ethylene/alpha-olefin copolymer comprising:

polymerizing a feed stream supplied in the presence of a catalyst including at least one of a transition metal catalyst or a co-catalyst to produce a reaction product; and
obtaining an ethylene/alpha-olefin copolymer from the reaction product,
wherein the ethylene/alpha-olefin copolymer has an ERI (ethylene-unit repeatness index) of 1.20 or less and the ERI is defined by the following Equation 1:

[Equation 1]

$$ERI = \frac{\{2 \times [EE]\} \times \{[EO]\}}{\{[EO] \times (C_E/C_O)\} \times \{2 \times [OO] \times (C_E/C_O)\}}$$

wherein

[EE] (ethylene-ethylene), [EO] (ethylene-alpha-olefin), and [OO] (alpha-olefin-alpha-olefin) are diad fractions of the ethylene/alpha-olefin copolymer measured by $^{13}$C-NMR; and
$C_E/C_O$ is a ratio of a number of ethylene moles ($C_E$) to a number of alpha-olefin moles (Co) in a liquid phase.

**10.** The method as claimed in claim 9, wherein the feed stream comprises a monomer and a comonomer,

the monomer comprises ethylene, and
the comonomer comprises at least one selected from the group consisting of 1-butene, 1-hexene, 1-pentene, 4-methyl-1-pentene, and 1-octene.

**11.** The method as claimed in claim 10, wherein, in the polymerization reaction,

the monomer is supplied at a flow rate of 50 g/hr to 350 g/hr,
the comonomer is supplied at a flow rate of 50 g/hr to 250 g/hr, and
a ratio of the flow rate of the monomer to the flow rate of the comonomer is 0.1 to 2.

**12.** The method as claimed in claim 9, wherein hydrogen is supplied at a flow rate of 0.01 g/hr to 0.3 g/hr in the polymerization reaction.

**13.** The method as claimed in claim 9, wherein the polymerization reaction is performed at a temperature of 70°C to 140°C and a pressure of 30 bar to 100 bar.

**14.** The method as claimed in claim 9, wherein the transition metal catalyst comprises at least one selected from the group consisting of a catalyst represented by the following Formula 1 and a catalyst represented by the following Formula 2:

[Formula 1]

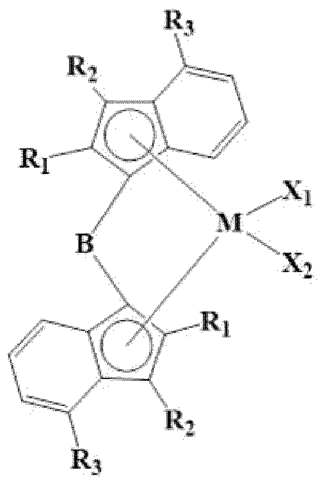

[Formula 2]

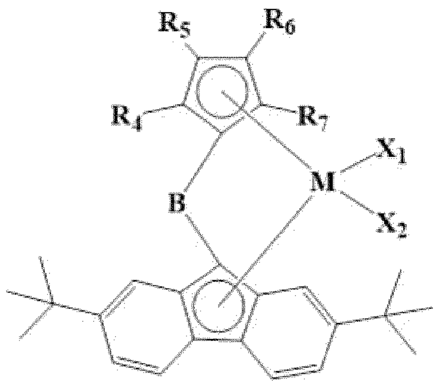

wherein

M is titanium, zirconium or hafnium;
B is an alkylene group having 1 to 20 carbon atoms, an arylene group having 6 to 20 carbon atoms, a dialkylsilicon group having 1 to 20 carbon atoms, a dialkylgermanium group having 1 to 20 carbon atoms, an alkylphosphine group having 1 to 20 carbon atoms, or an alkylamine group having 1 to 20 carbon atoms;
$X_1$ and $X_2$ are each independently a halogen atom, an alkyl group having 1 to 20 carbon atoms, an alkenyl group having 2 to 20 carbon atoms, an alkynyl group having 2 to 20 carbon atoms, an aryl group having 6 to 20 carbon atoms, an alkylaryl group having 7 to 40 carbon atoms, an arylalkyl group having 7 to 40 carbon atoms, an alkylamido group having 1 to 20 carbon atoms, an arylamido group having 6 to 20 carbon atoms, an alkylidene group having 1 to 20 carbon atoms, or an alkoxy group having 1 to 20 carbon atoms; and
$R_1$ to $R_7$ are each independently hydrogen, an alkyl group having 1 to 20 carbon atoms, an alkenyl group having 2 to 20 carbon atoms, an aryl group having 6 to 20 carbon atoms, an alkylaryl group having 7 to 20 carbon atoms, an arylalkyl group having 7 to 20 carbon atoms, a cycloalkyl group having 5 to 60 carbon atoms, a heterocyclic group having 4 to 20 carbon atoms, an alkynyl group having 1 to 20 carbon atoms, a heteroaryl group having 6 to 20 carbon atoms, or a silyl group having 6 to 20 carbon atoms.

**15.** The method as claimed in claim 9, wherein the co-catalyst comprises an activator compound including a boron compound and a co-activator compound including an organoaluminum compound.

**16.** The method as claimed in claim 15, wherein the boron compound comprises at least one selected from the group consisting of triphenylcarbenium tetrakis(pentafluorophenyl)borate, N,N-dimethylcyclohexylammonium tetrakis(pentafluorophenyl)borate, N,N-dimethylbenzylammonium tetrakis(pentafluorophenyl)borate, and N,N-dimethylanilinium tetrakis(pentafluorophenyl)borate, and
the organoaluminum compound comprises at least one selected from the group consisting of: alkylaluminum including dimethylaluminum, dimethylethylaluminum, trimethylaluminum, triethylaluminum, tributylaluminum, trihexylaluminum, trioctylaluminum, triisopropylaluminum, or triisobutylaluminum; alkylaluminum halide including dimethylaluminum chloride, diethylaluminum chloride, methylaluminum dichloride, ethylaluminum dichloride, dimethylaluminum fluoride, or ethylaluminum sesquichloride; dialkyl aluminum hydride including diethyl aluminum hydride or diisobutyl aluminum hydride, methyl aluminoxane, and improved methyl aluminoxane.

**17.** The method as claimed in claim 9, wherein, in the polymerization reaction, the transition metal catalyst is supplied at 0.001 μmol/min to 0.040 μmol/min, and the co-catalyst is supplied at 0.01 μmol/min to 0.2 μmol/min.

**18.** An ethylene/alpha-olefin copolymer prepared using the method as claimed in any one of claims 9 to 17.

**19.** A composition for a hot melt adhesive comprising the ethylene/alpha-olefin copolymer as claimed in any one of claims 1 to 8.

**20.** A composition for a hot melt adhesive comprising the ethylene/alpha-olefin copolymer as claimed in claim 18.

Europäisches Patentamt
European Patent Office
Office européen des brevets

# EUROPEAN SEARCH REPORT

Application Number
EP 24 22 2004

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2020/079887 A1 (AJELLAL NOUREDDINE [FI] ET AL) 12 March 2020 (2020-03-12)<br>* examples *<br>* paragraph [0221] *<br>----- | 1-20 | INV.<br>C08F210/16<br>C08F2/06<br>C08F4/6592<br>C09J4/00 |
| X | US 2021/395412 A1 (KIM NA YEUN [KR] ET AL) 23 December 2021 (2021-12-23)<br>* examples *<br>* page 14 - page 15 *<br>* claims *<br>----- | 1-20 | |
| X | EP 2 966 096 A1 (JAPAN POLYETHYLENE CORP [JP]) 13 January 2016 (2016-01-13)<br>* example 3 *<br>* page 36; table 1 *<br>----- | 1-20 | |
| X | US 2021/163643 A1 (GONG JIN SAM [KR] ET AL) 3 June 2021 (2021-06-03)<br>* paragraph [0148] *<br>* table 2 *<br>* example 3 *<br>* claims *<br>----- | 1-20 | TECHNICAL FIELDS SEARCHED (IPC)<br>C08F<br>C09J |

The present search report has been drawn up for all claims

| Place of search | Date of completion of the search | Examiner |
|---|---|---|
| Munich | 16 May 2025 | Thomas, Dominik |

4

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
........................................
& : member of the same patent family, corresponding document

EPO FORM 1503 03.82 (P04C01)

# ANNEX TO THE EUROPEAN SEARCH REPORT ON EUROPEAN PATENT APPLICATION NO. EP 24 22 2004

This annex lists the patent family members relating to the patent documents cited in the above-mentioned European search report.
The members are as contained in the European Patent Office EDP file on
The European Patent Office is in no way liable for these particulars which are merely given for the purpose of information.

16-05-2025

| Patent document cited in search report | Publication date | Patent family member(s) | Publication date |
|---|---|---|---|
| US 2020079887 A1 | 12-03-2020 | CN 110234665 A | 13-09-2019 |
| | | EP 3555148 A1 | 23-10-2019 |
| | | ES 2943392 T3 | 13-06-2023 |
| | | JP 7130644 B2 | 05-09-2022 |
| | | JP 2020502327 A | 23-01-2020 |
| | | KR 20190087636 A | 24-07-2019 |
| | | US 2020079887 A1 | 12-03-2020 |
| | | WO 2018108918 A1 | 21-06-2018 |
| US 2021395412 A1 | 23-12-2021 | CN 113195558 A | 30-07-2021 |
| | | EP 3896102 A1 | 20-10-2021 |
| | | JP 7223139 B2 | 15-02-2023 |
| | | JP 2022512356 A | 03-02-2022 |
| | | KR 20200071318 A | 19-06-2020 |
| | | US 2021395412 A1 | 23-12-2021 |
| | | WO 2020122371 A1 | 18-06-2020 |
| EP 2966096 A1 | 13-01-2016 | CN 105008408 A | 28-10-2015 |
| | | EP 2966096 A1 | 13-01-2016 |
| | | JP 5695687 B2 | 08-04-2015 |
| | | JP 2014169408 A | 18-09-2014 |
| | | WO 2014136778 A1 | 12-09-2014 |
| US 2021163643 A1 | 03-06-2021 | CN 111971313 A | 20-11-2020 |
| | | EP 3760652 A1 | 06-01-2021 |
| | | ES 2935976 T3 | 13-03-2023 |
| | | JP 7130300 B2 | 05-09-2022 |
| | | JP 2021517199 A | 15-07-2021 |
| | | KR 20190127588 A | 13-11-2019 |
| | | KR 20190127591 A | 13-11-2019 |
| | | US 2021163643 A1 | 03-06-2021 |
| | | WO 2019212304 A1 | 07-11-2019 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- KR 1020230191518
- KR 1020190013859
- KR 101437509


### Non-patent literature cited in the description


- *Organometallics*, 1994, vol. 13, 954-963
- *J. Mol. Catal. A: chem.*, 1998, vol. 130, 149-162
- *J. Macromol. Sci. Part C: Polym. Rev.*, 1989, vol. 29, 201-317
- *J. Polym. Sci. Part A: Polym. Chem.*, 1994, vol. 32, 2979-2987
- *RSC Adv.*, 2017, vol. 7, 10175-10182